# FASCICULE DE BREVET EUROPEEN

(11) **EP 1 388 526 B1**
(45) Date de publication et mention de la délivrance du brevet: **01.10.2014**
(21) Numéro de dépôt: 03291957.3
(22) Date de dépôt: 04.08.2003
(51) Int. Cl.: C04B 7/36, C04B 7/44

(54) **Perfectionnement aux procédés de fabrication d'un ciment en vue notamment de réduire l'émission des NOx**
Veerfahren zur Herstellung von Zement, insbesondere zur Reduktion von NOx-Emissionen
Process for making cement, especially for the reduction of NOx-emissions

(30) Priorité: 08.08.2002 FR 0210109
(43) Date de publication de la demande: 11.02.2004
(73) Titulaire: VICAT, 92095 Paris La Défense Cedex (FR); Ciments Vigier SA, Commune de Péry (CH)
(72) Inventeur: Brunner, Paul, 3053 Münchenbuchsee (CH); Marteau, Stéphane, 38890 Salagnon (FR)
(74) Mandataire: Hubert, Philippe

(56) Documents cités:
- DE-A- 3 100 661
- US-A- 4 035 193
- US-A1- 2001 007 232
- M.ONO ET AL: "Katalytische Reduktion von Stickstoffmonoxid mit Kohlenmonoxid über Zementrohmehl" ZEMENT,KALK,GIPS, no. 5, 1978, pages 242-244, XP002240432 WIESBADEN;DE

## Description

La présente invention concerne un perfectionnement aux procédés de fabrication du ciment, perfectionnement destiné notamment à réduire l'émission des NO

Il est bien connu que l'émission des oxydes d'azote est un des problèmes majeurs posés à l'industrie du ciment, du fait des températures particulièrement élevées nécessaires dans le four de cimenterie pour réaliser la transformation de la matière première, généralement dénommée farine crue, en clinker qui, après mélange avec du gypse conduit au ciment.

D'une façon générale, le ciment est préparé à partir d'un clinker préparé dans un four rotatif de grande dimension dans lequel on introduit un mélange de pierres calcaires et argileuses très finement broyées couramment désigné par farine crue. Ce mélange est constitué de calcaire, de silice, d'alumine et d'oxyde ferrique et porté à une température de l'ordre de 1450°C, sous l'effet de la flamme du four de cimenterie dont le coeur est à une température de l'ordre de 2000°C, ce qui conduit à différentes réactions chimiques de combinaison des constituants, encore désignées par réactions de clinkérisation.

A cette température, on génère des oxydes d'azote désignés par NOₓ (mélanges de NO et NO₂), issus de la combinaison d'azote et d'oxygène à la température élevée de la flamme.

Il est bien connu que les NOₓ sont des polluants, responsables en particulier des pluies acides et que le taux d'émission maximale des différentes usines est strictement réglementé.

Différentes solutions ont été mises en oeuvre jusqu'à présent pour éviter les rejets excessifs de NOₓ. D'une façon générale, les industriels cherchent soit à traiter les fumées émises avant leur rejet dans l'atmosphère, soit à modifier les procédés de réalisation du clinker pour limiter les rejets de NOₓ.

Un exemple de procédé selon lequel une réduction importante de l'émission des NOₓ a été réalisée est le brevet US 6 113 684 qui porte sur une composition particulière de farine crue utilisée pour préparer un clinker dans des conditions plus douces de température, de l'ordre de 900 à 1200°C.

La publication intitulée « Katalytische Reduktion von Stickstoffmonoxid mit Kohlenmonoxid über Zementrohmehl" parue dans Zement-Kalk-Gips Nr. 5/1978, 242-244, décrit la réaction de NO avec CO en présence de différentes matières premières constitutives d'une farine crue. Cette étude est réalisée sous pression atmosphérique à des températures comprises entre 700 et 1000°C qui sont celles utilisées pour le préchauffage de la farine crue avant réaction de clinkérisation et conclut à la possibilité de diminuer la teneur en NOₓ grâce à l'utilisation d'une farine crue ou d'un mélange CaCO₃/Fe₂O₃ dans la partie de l'installation où est réalisé le préchauffage.

Le document US 2001/007232 décrit un procédé de préparation d'un clinker comprenant une étape de précalcination d'une farine crue préalablement préchauffée puis une étape de cuisson dans un four rotatif et un refroidissement du clinker ainsi obtenu.

Afin de maintenir l'excès d'oxygène requis à un niveau aussi faible que possible, ce document prévoit notamment de réguler la quantité d'agent oxydant et/ou de catalyseur injecté dans l'étape de précalcination.

Les inventeurs de la présente invention se sont maintenant aperçus qu'il était possible de diminuer d'au moins 20 % l'émission des oxydes d'azote en injectant d'oxyde ferrique directement dans la flamme du four de cimenterie.

Ils ont en plus découvert que, lorsque le procédé recourait à une étape de précalcination avant l'entrée de la farine préchauffée dans le four, il était également possible de diminuer l'émission des NOₓ en injectant des oxydes métalliques dans la flamme servant à réaliser ladite étape de précalcination, cette injection pouvant être faite dans ce cas en complément d'une injection d'oxyde ferrique dans la flamme principale du four de cimenterie.

Selon l'une de ses caractéristiques essentielles, l'invention concerne un procédé pour la fabrication d'un ciment comprenant une étape de cuisson, sous l'action d'une flamme dite flamme du four de cimenterie, d'une farine crue préalablement préchauffée puis éventuellement précalcinée sous l'action d'une flamme dite flamme de précalcination, caractérisé en ce qu'il comprend l'injection dans la flamme du four de cimenterie d'oxyde ferrique.

Cette injection peut être faite, comme exposé précédemment, soit dans la flamme du four de cimenterie, soit dans la flamme du four de cimenterie et dans la flamme de la zone de précalcination lorsque l'installation présente une zone de précalcination.

Toutefois, il est apparu qu'il est préférable de réaliser au moins une partie de l'injection d'oxyde dans la flamme du four de cimenterie dont la température est nettement plus élevée.

Ainsi, selon une variante préférée, la totalité de l'injection d'oxyde ferrique est réalisée dans la flamme principale du four de cimenterie. Toutefois, lorsque que l'installation présente une zone de précalcination, l'injection d'oxyde ferrique dans la flamme principale peut être complétée par une injection dans la flamme de précalcination.

En effet, il est apparu que, l'un des avantages essentiels du procédé selon l'invention est que l'oxyde est introduit à très haute température et en présence d'une quantité importante de monoxyde de carbone issu de la combustion incomplète au coeur de la flamme, ce qui rend la réduction des NOₓ particulièrement efficace et, d'autant plus efficace qu'elle est réalisée à plus haute température.

L'oxyde ferrique s'avère particulièrement intéressant du fait d'une part de son activité catalytique et d'autre part de la possibilité supplémentaire qu'il offre en permettant, à condition de l'introduire en excès sensible par rapport à la quantité catalytique, de moduler la teneur en oxyde ferrique du clinker final.

Ainsi, un premier avantage du procédé est qu'il peut être mis en oeuvre dans toute installation classique de fabrication d'un clinker destiné à la préparation des ciments.

Un autre avantage du procédé de l'invention est de permettre, en jouant sur la quantité d'oxyde ferrique injecté dans la flamme du four de cimenterie, de moduler la teneur en oxyde ferrique du ciment final, teneur qu'il peut être intéressant industriellement de modifier ponctuellement pour une application spécifique du ciment pour laquelle une teneur augmentée en oxyde ferrique serait recherchée, sans avoir à modifier la composition de la farine crue utilisée pour la réalisation du clinker.

D'autres avantages et caractéristiques de la présente invention apparaîtront dans la description détaillée qui suit, faite en référence aux figures 1 à 3 qui représentent respectivement :
- figure 1: le schéma d'une installation classique de cimenterie,
- figure 2 : le schéma d'une zone de précalcination qui peut être intégrée dans l'installation de la figure 1,
- figure 3, donnée en référence à l'exemple 1 : une courbe de variation de la teneur en NOₓ dans les gaz émis par le four de cimenterie avant et pendant le traitement selon l'invention,
- figure 4, donnée en référence à l'exemple 2 : les variations de la teneur en NOₓ des gaz rejetés par l'installation dans le cas d'une concentration en oxyde métallique plus élevée.
- figure 5, donnée en référence à l'exemple 3 : les variations de la concentration moyenne en NOₓ ainsi que de la concentration moyenne rapportée à une concentration en oxygène de 11 % dans les gaz rejetés au cours d'un essai décrit dans l'exemple 3.

Comme il est bien connu, le calcaire et la marne sont les constituants de base nécessaires à la fabrication d'un ciment.

Une fois extraites, ces deux matières premières sont moulues, mélangées puis cuites à une température de l'ordre de 1450°C pour donner naissance à un clinker qui est récupéré en sortie du four avant d'être broyé puis mélangé à du gypse pour fabriquer le ciment final.

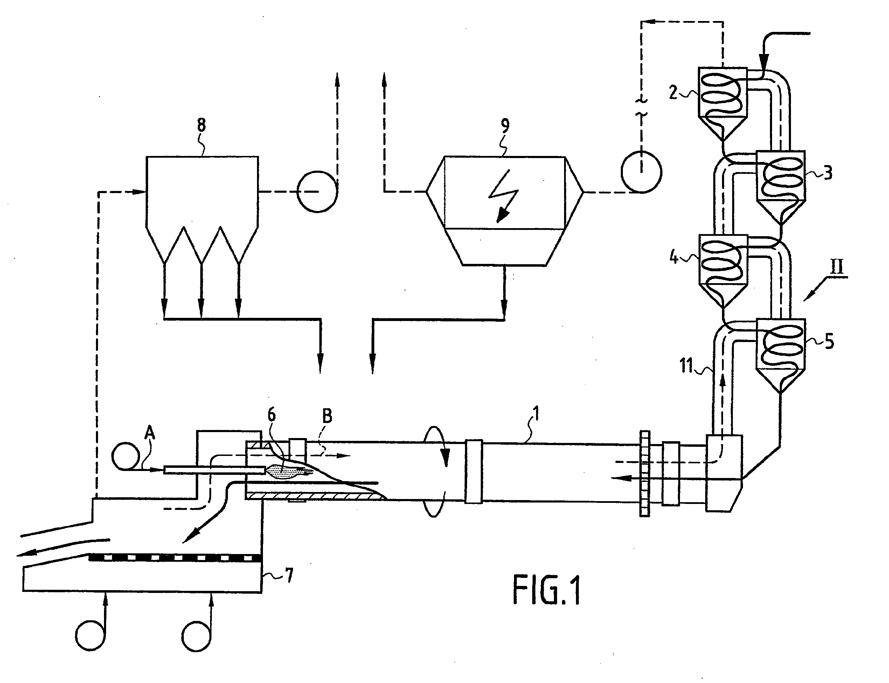

D'une façon générale, cette opération de fabrication du clinker est réalisée dans une installation du type de celle représentée sur la figure 1. La figure 1 représente schématiquement l'installation où est réalisée la transformation de la farine, dans un four 1, en clinker par cuisson de cette farine à une température de l'ordre de 1450°C, étape qui constitue l'opération clé de la fabrication du ciment.

Comme représenté sur la figure 1, ce processus de cuisson est précédé par une opération de préchauffage de la farine crue dans une tour équipée de cyclones échangeurs de chaleur 2, 3, 4, 5. La farine préchauffée à une température de l'ordre de 850 à 900°C est ensuite introduite dans le four par l'intermédiaire du dernier cyclone 5.

Sur la figure 1, on a donné l'exemple d'une tour équipée de 4 échangeurs notés 2, 3, 4, 5.

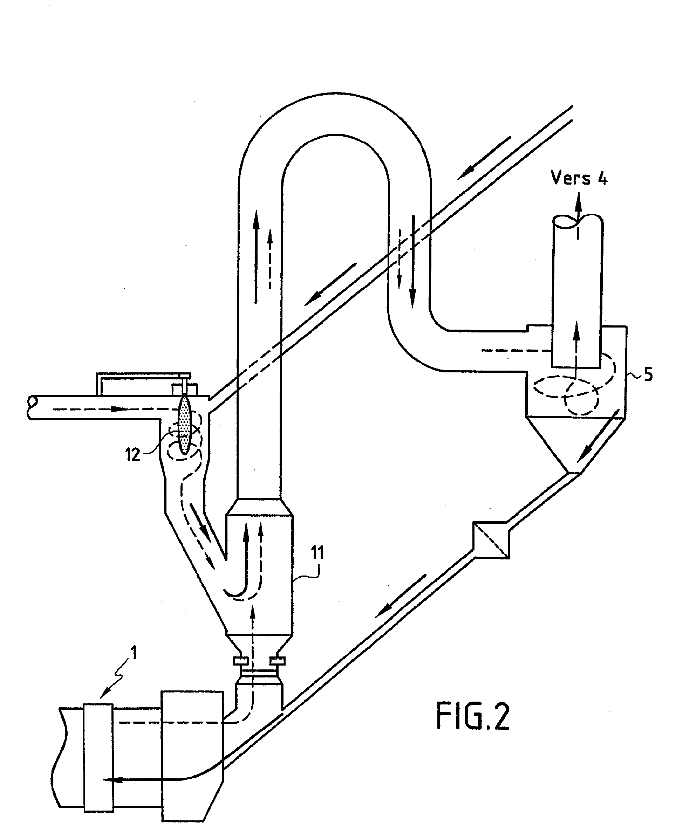

Le processus de préchauffage peut intégrer une zone de précalcination telle que celle représentée sur le schéma de la figure 2. Cette zone de précalcination s'intègre entre les cyclones 4 et 5 représentés sur la figure 1.

Lorsque le procédé de fabrication du ciment comprend une étape de précalcination, une partie de l'énergie thermique utilisée pour la fabrication du clinker est introduite dans cette étape.

Plus précisément, la farine préchauffée issue du cyclone 4 subit une précalcination sous l'action d'une flamme 12, dite flamme de précalcination dont la température est de l'ordre de 1200°C produite par une tuyère dans laquelle on introduit un combustible qui peut être identique ou différent de celui utilisé pour alimenter la flamme principale du four et par de l'air tertiaire.

La farine ainsi précalcinée dans cette zone est ensuite aspirée par le cyclone 5 avant d'être introduite dans le four de cuisson 1.

La cuisson de la farine, préalablement préchauffée, et éventuellement précalcinée, comme indiqué ci-dessus, est ensuite réalisée dans le four rotatif 1 dans lequel la matière va glisser le long de parois revêtues de briques réfractaires pour atteindre la zone, qui constitue la zone dite de clinkérisation dont la température est de l'ordre de 1450°C, par l'intermédiaire de la flamme 6 dont la température est de l'ordre de 2000°C. A ce stade, les minéraux contenus dans la farine réagissent à l'état semi liquide pour former un nouveau composé minéralogique, le clinker.

La flamme du four de cimenterie est produite par une tuyère dans laquelle on introduit des combustibles ainsi que de l'air appelé air primaire comme représenté symboliquement par la flèche A. La flamme est également alimentée par de l'air secondaire, généralement en provenance du refroidisseur, introduit selon la flèche B.

La température de la flamme avoisine généralement les 2000°C. Différents types de combustible peuvent être utilisés, aussi bien des combustibles liquides que solides. En général, on utilise du charbon, du coke de pétrole ou un produit d'origine pétrolière à haute viscosité ou encore différents combustibles de substitution tels que des farines animales, des solvants ou divers déchets combustibles.

La masse incandescente quitte ensuite le four et traverse la zone de refroidissement 7 où la température du clinker se trouve nettement abaissée jusqu'à environ 80°C. Le clinker est ensuite envoyé vers un silo ou un hall de stockage avant d'être broyé et mélangé avec du gypse pour former le ciment.

Le sens de circulation des gaz et de la matière est représenté sur les figures 1 et 2 respectivement par des flèches discontinues pour le gaz et continues pour la matière.

Les gaz de combustion issus du four et ayant traversé la zone de préchauffage ainsi que l'air de refroidissement en excès sont soumis à une étape de purification dans les filtres 8 et 9 avant leur rejet vers l'atmosphère.

Il est classique de mesurer la teneur en NOₓdes gaz issus du four de cimenterie immédiatement après la sortie du four dans une zone 11 dite boîte à fumée dans laquelle on installe une sonde destinée à effectuer ce dosage.

Comme exposé précédemment, le procédé de l'invention s'applique à toute installation classique de cimenterie du type de celle représentée sur la figure 1, éventuellement complétée par le perfectionnement représenté sur la figure 2, comprenant ou non une étape de précalcination telle que réprésentée sur la figure 2 et présente l'avantage de ne nécessiter aucun aménagement de cette installation puisque la seule modification par rapport aux procédés classiques est l'introduction d'oxyde ferrique au niveau de la flamme du four de cimenterie ou des deux flammes, flamme du four de cimenterie et flamme de précalcination, lorsque l'installation comprend une zone de précalcination.

Cette injection peut-être réalisée directement dans la flamme, en particulier sous forme de poudre finement broyée injectée dans la tuyère.

L'injection peut être également faite en mélange avec le combustible liquide ou solide introduit dans la tuyère pour alimenter la flamme.

Dans le cas où ce combustible est un combustible solide tel que du coke de pétrole, il est avantageux d'introduire l'oxyde métallique après l'avoir co-broyé avec ce combustible.

Le choix d'oxyde ferrique permet de n'introduire aucun risque de pollution du ciment final.

Ce choix présente en outre l'avantage de pouvoir apporter à volonté des modifications à la composition en oxyde ferrique du ciment final.

Les quantités d'oxyde ferrique peuvent varier dans de larges proportions. L'homme du métier pourra aisément déterminer par de simples essais de routine, les quantités minimales à injecter pour observer l'effet catalytique recherché.

Les quantités maximales qu'il est possible d'injecter seront déterminées également dans des essais de routine, en les optimisant pour obtenir l'effet d'abattement de la teneur en NOₓ dans les gaz rejetés par le four de cimenterie, sans toutefois risquer d'introduire une modification plus importante que celle éventuellement recherchée de la composition en oxydes ferriques du clinker final.

Les quantités d'oxyde ferrique dépendent, bien entendu, également des quantités et des débits de farine crue traitée.

II est en effet bien connu que les quantités de NOₓ générées sont très intimement liées au bilan thermique des installations de production du clinker.

Ce bilan thermique qui est classiquement utilisé dans l'industrie de la cimenterie pour caractériser le fonctionnement de l'installation, correspond à l'énergie thermique mise en oeuvre pour fabriquer le clinker.

Cette énergie est généralement de l'ordre de 3100 MJ à 4000 MJ par tonne de clinker. Or, ce bilan thermique est assez représentatif de la quantité de NOₓ générée. Il est avantageux d'introduire de 0.1 g à 17 g d'oxyde ferrique par MJ de bilan thermique.

L'introduction de cette quantité d'oxyde ferrique dans la flamme du four de cimenterie permet dans tous les cas de réduire considérablement la teneur en NOₓ des gaz.

Si l'on souhaite obtenir une diminution de la teneur en NOₓ des gaz d'au moins 20 %, sans modifier sensiblement la concentration du clinker final en oxyde ferrique, c'est à dire en introduisant une modification inférieure à 3 % de la teneur en oxyde ferrique du clinker, on introduira de préférence de 0,1 g à 8 g d'oxyde ferrique par MJ de bilan thermique du four.

Lorsque l'on souhaite, pour des raisons techniques, modifier, de façon un peu plus sensible, la teneur en oxyde ferrique du clinker final, par exemple si l'on souhaite augmenter sa teneur de 3 à 5 % en poids, on introduira alors dans la flamme ou dans l'une au moins des flammes de l'installation de cimenterie, lorsque cette installation comprend une zone de précalcination, de 8 g à 17 g d'oxyde ferrique, par MJ de bilan thermique.

L'oxyde ferrique Fe₂O₃ introduit le moins de pollution possible dans le clinker final.

Différentes sources d'oxyde ferrique pourront être choisies.

Selon une première variante, on utilise un oxyde ferrique commercial, tel qu'une poudre d'oxyde ferrique contenant au moins 75 % d'oxyde ferrique, par exemple des cendres de pyrite.

On pourra également choisir, comme source d'oxyde ferrique, différents mélanges contenant des quantités minimum d'oxyde ferrique. A titre d'exemple de tels mélanges, on citera en particulier ceux qui comprennent, outre l'oxyde ferrique, d'autres éléments eux-mêmes également contenus dans le clinker final, en particulier des mélanges contenant au moins 2 % en poids d'oxyde ferrique, le reste desdits mélanges étant constitués essentiellement d'oxydes choisis parmi Al₂O₃, SiO₂ et CaO.

A titre d'exemple de tels mélanges, on citera les farines crues telles qu'elles sont classiquement utilisées dans la fabrication des clinkers, telles que des farines contenant de 2 à 8 % en poids d'oxyde ferrique Fe₂O₃.

Les poudres d'oxyde ferrique utilisées dans le procédé de l'invention ont des granulométries qui peuvent varier dans des gammes relativement étendues, compatibles toutefois avec les conditions d'injection soit directement dans la flamme par l'intermédiaire de la tuyère, soit en mélange avec un combustible.

D'une façon avantageuse, on utilisera des mélanges dont la granulométrie correspond à un refus de 10 à 20 % au tamis de 90 µm.

Selon une deuxième caractéristique, l'invention concerne également un procédé pour diminuer l'émission des NOₓ générés par le four de cimenterie d'une installation de fabrication de ciment, comprenant en amont dudit four de cimenterie une zone de préchauffage de la farine crue et éventuellement une zone de précalcination de la farine préalablement préchauffée avant son entrée dans ledit four de cimenterie, caractérisé en qu'il consiste à injecter dans la flamme du four de cimenterie et éventuellement dans la flamme de la zone de précalcination, dans les conditions définies précédemment, de l'oxyde ferrique Fe₂O₃, en quantité efficace pour obtenir une diminution d'au moins 20 % de la teneur en NOₓ des gaz rejetés par le four de cimenterie.

### EXEMPLES

### Exemple 1 : mise en évidence de la diminution d'émission des NOx par introduction de cendres de pyrite dans la flamme d'un four de cimenterie

On a enregistré en continu à l'aide d'une sonde SICK G30 la teneur en NOₓ dans les gaz issus du four de cimenterie d'une installation du type de celle représentée sur la figure 1 traitant 100 tonnes par heure de farine crue.

A l'instant t, = 35 heures, on a commencé à injecter, les autres conditions de fonctionnement restant par ailleurs identiques, du Fe₂O₃ directement dans la buse alimentant la flamme du four de cimenterie, à raison de 0,8 tonne par heure. Cette injection s'est poursuivie pendant 9 heures.

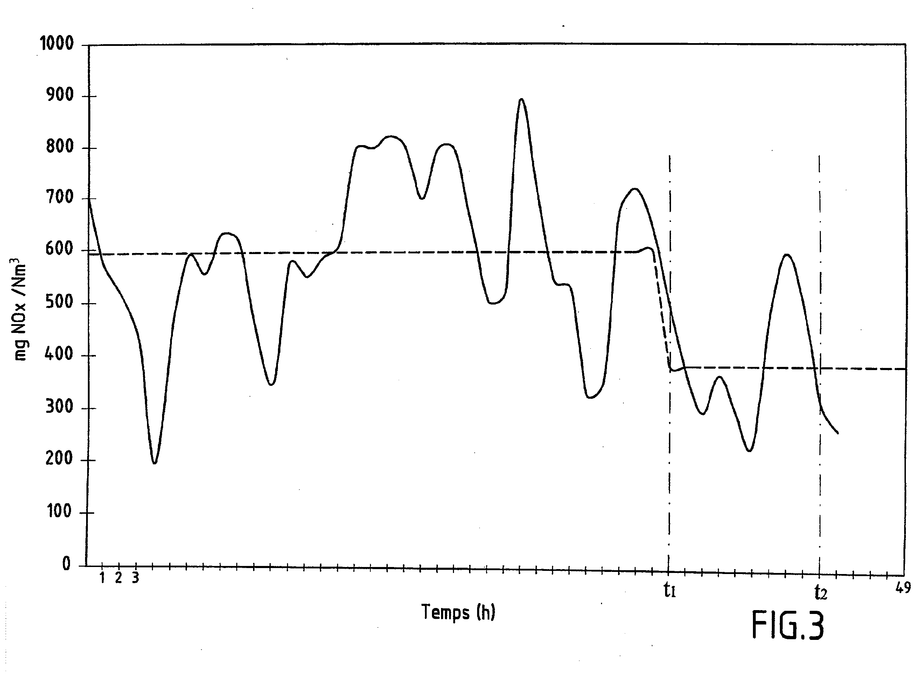

La figure 3 montre que le taux moyen de NOₓ dans les gaz passe d'une valeur moyenne de 596 mg/Nm³ en absence de Fe₂O₃ à une valeur de 381 mg/Nm³ au cours de l'essai en présence de Fe₂O₃, ce qui correspond à une dimunution du taux de NOₓ de 36 %.

### Exemple 2 : mise en évidence de la possibilité d'enrichir un ciment en oxyde ferrique et de simultanément abaisser la teneur en oxyde d'azote des gaz rejetés.

L'installation utilisée pour cet essai est celle représentée sur la figure 1. La farine crue est tout au long de l'essai, introduite à raison de 65 tonnes par heure.

La seule modification apportée au cours de l'essai a été l'introduction, à partir du temps t'₁ = 2 jours et 7 heures, de 2 tonnes par heure de cendres de pyrite injectées directement dans la buse alimentant la flamme du four de cimenterie. Cette injection est poursuivie pendant 49 h jusqu'au temps t'₂.

Il est apparu que 3 heures après le début de l'injection d'oxyde ferrique, le clinker produit avait une teneur en oxyde ferrique de 6,2 % en poids contre 2,7 % avant le début de l'invention d'oxyde ferrique et que par ailleurs, on observait dès l'injection de la Fe₂O₃ dans la flamme une très nette diminution de la teneur des NOₓ dans les gaz émis par le four de cimenterie, cette teneur réaugmentant dès l'arrêt de l'injection de cendres de pyrite dans la flamme (au bout de deux jours de fonctionnement en présence de cendres de pyrite).

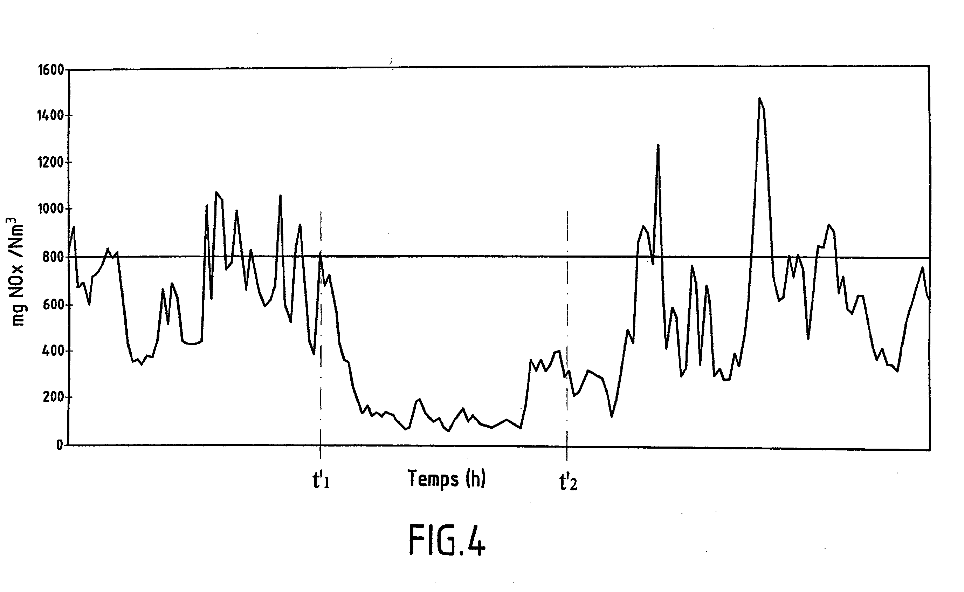

Plus précisément, il est apparu que la moyenne sur la totalité de l'essai tel qu'il est représenté sur la figure 4 était de 497 mg de NOₓ/Nm³ alors qu'elle est de 205 mg/Nm³ en présence de cendres de pyrite.

Le tableau qui suit donne l'analyse du clinker formé pendant la partie de l'essai où l'on a injecté de l'oxyde ferrique dans la flamme.

Ce tableau montre que l'invention rend possible la préparation d'un clinker à teneur accrue en oxyde ferrique, ce qui permet notamment d'envisager des applications spéciales en particulier lorsque l'on cherche une résistance particulière du ciment aux eaux sulfatées.

**CLINKER DOPE AUX CENDRES DE PYRITE**

| | **Composition chimique** | | | | | | |
|---|---|---|---|---|---|---|---|
| **échantillon** | **SiO₂** | **Al₂O₃** | **Fe₂O₃** | **CaO** | **MgO** | **SO₃** | **K₂O** |
| t'₁ + 2 h | 21.1 | 4.6 | 6.2 | 63.4 | 2.2 | 1.1 | 0.8 |
| t'₁ + 8 h | 20.3 | 4.6 | 8.9 | 61.2 | 2.3 | 1.3 | 1.1 |
| t'₁ + 14 h | 20.5 | 4.8 | 7.9 | 62.0 | 2.3 | 1.3 | 0.9 |
| t'₁ + 20 h | 20.5 | 4.9 | 7.3 | 62.0 | 2.2 | 1.5 | 1.1 |
| t'₁ + 26 h | 20.3 | 4.7 | 9.0 | 62.0 | 2.2 | 0.8 | 0.8 |
| t'₁ + 32 h | 20.1 | 4.7 | 8.0 | 61.4 | 2.2 | 1.8 | 1.0 |
| t'₁ + 38 h | 20.5 | 4.8 | 7.9 | 62.0 | 2.3 | 1.3 | 0.9 |
| t'₁ + 44 h | 20.5 | 4.9 | 7.3 | 62.0 | 2.2 | 1.5 | 1.1 |
| t'₁ + 50 h | 20.2 | 5.0 | 7.7 | 61.7 | 2.2 | 1.6 | 1.1 |

### Exemple 3 : autres exemples de mise en oeuvre de l'invention en injectant le Fe₂O₃ en mélange avec un combustible solide

Trois essais différents ont été réalisés, chacun d'une durée de 12 à 24 heures.

Il a été utilisé de l'oxyde ferrique qui a été co-broyé avec du coke de pétrole dans un broyeur pour réduire la granulométrie des particules.

La granulométrie finale du mélange coke de pétrole plus oxyde ferrique correspond à 5 % de refus au tamis de 200 µm.

La mesure des teneurs en NOₓ a été effectuée en boîte à fumée, c'est à dire au-dessus de l'extrémité du four à l'aide d'une sonde SIEMENS.

Pour ces différents essais, le four de cimenterie a été alimenté en farine crue à raison de 180 à 220 tonnes par heure.

Au cours de ces essais, le dosage en Fe₂O₃ a varié de 300 kg/h à 600 kg/h dans la tuyère.

A ces taux, la variation de composition chimique du clinker, par ajout d'oxyde ferrique est négligeable

Avec 300 kg/h d'oxyde ferrique introduit, on a observé un abaissement de la teneur en NOₓ de l'ordre de 20 à 30 %.

Avec 600 kg/h de Fe₂O₃, on a observé un abaissement de la teneur en NOₓ supérieur à 35 %.

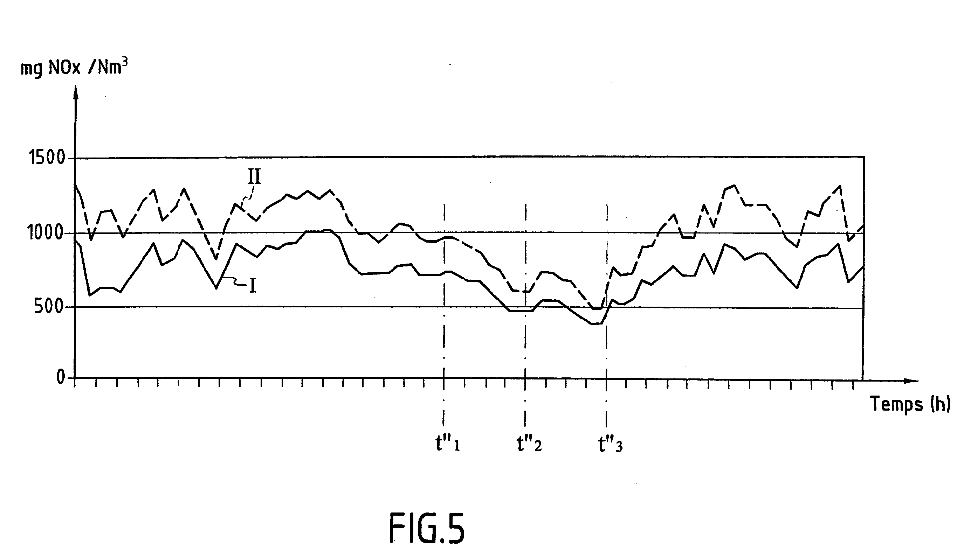

Les courbes I et II représentées sur la figure 5 donnent respectivement les concentrations moyennes en NOₓ (courbe I) ainsi que les concentrations moyennes en NOₓ rapportées à 11 % en oxygène dans les gaz récupérés en boîte à fumée au cours de l'un des exemples décrits ci-dessus au cours duquel on a injecté 300 kg/h d'oxyde ferrique pendant 4 heures (entre les temps notés t"₁ et t'₂ sur la figure 4) puis 600 kg/h pendant les 4 heures suivantes (entre les temps notés t"₂ et t"₃ sur la figure 5).

On constate sur ces courbes que l'abattement de la concentration moyenne en NOₓ dans les gaz recueillis en boîte de fumée est de l'ordre de 18 % pour un débit d'introduction de l'oxyde ferrique de 300 kg/h et de l'ordre de 36 % pour un débit d'introduction d'oxyde ferrique de 600 kg/h.

## Revendications

1. Procédé pour la fabrication d'un ciment comprenant une étape de cuisson, sous l'action d'une flamme dite flamme du four de cimenterie, d'une farine crue préalablement préchauffée puis éventuellement précalcinée sous l'action d'une flamme dite flamme de précalcination, **caractérisé en ce qu'**il comprend l'injection dans la flamme du four de cimenterie d'oxyde ferrique.

2. Procédé selon la revendication 1, **caractérisé en ce que** ledit oxyde ferrique est injecté directement dans la flamme du four de cimenterie.

3. Procédé selon l'une des revendications 1 ou 2, **caractérisé en ce que** ledit oxyde ferrique est injecté en mélange avec au moins un combustible utilisé pour alimenter la flamme du four de cimenterie.

4. Procédé selon la revendication 3, **caractérisé en ce que** ledit combustible est un combustible solide et **en ce que** ledit oxyde ferrique est préalablement mélangé et co-broyé avec ce combustible.

5. Procédé selon l'une des revendications 1 à 4, **caractérisé en ce que** l'oxyde ferrique est introduit à raison de 0,1 à 17 g par MJ de bilan thermique du four de cimenterie.

6. Procédé selon l'une des revendications 1 à 5, **caractérisé en ce que** l'on introduit de 0,1 g à 8 g d'oxyde ferrique par MJ de bilan thermique du four, de façon à obtenir une réduction de la teneur en NOₓ d'au moins 20 % et une concentration en oxyde ferrique du clinker modifiée de moins de 3%.

7. Procédé selon l'une des revendications 1 à 6, **caractérisé en ce que** l'on introduit de 8 g à 17 g d'oxyde ferrique par MJ de bilan thermique, de façon à obtenir à la fois une diminution d'au moins 20 % de la teneur en oxyde d'azote des gaz issus du four de cimenterie et un effet correcteur de la teneur en oxyde de fer dans le clinker final, correspondant à un enrichissement en oxyde ferrique d'environ 3 à 5 % en poids.

8. Procédé selon l'une des revendications 1 à 7, **caractérisé en ce que** ledit oxyde ferrique est introduit sous la forme d'un mélange contenant au moins 2 % en poids d'oxyde ferrique, le reste dudit mélange étant constitué essentiellement d'oxydes choisis parmi Al₂O₃, SiO₂ et CaO.

9. Procédé selon la revendication 8, **caractérisé en ce que** ledit mélange est une farine crue utilisable pour la fabrication d'un clinker, ladite farine crue contenant de 2 à 8 % en poids d'oxyde ferrique Fe₂O₃.

10. Procédé selon l'une des revendications 1 à 9, **caractérisé en ce qu'**il comprend une étape préalable de précalcination.

11. Procédé selon la revendication 10, **caractérisé en ce qu'**il comprend en outre, l'injection d'oxyde ferrique dans la flamme de précalcination.

## Patentansprüche

1. Verfahren für die Herstellung eines Zements, umfassend einen Schritt zum Brennen, unter der Wirkung einer Flamme, sogenannten Flamme des Zementofens, eines Rohmehls, das zuvor vorerhitzt wird, anschließend unter der Wirkung einer Flamme, sogenannten Vorkalzinierungsflamme, eventuell vorkalziniert wird, **dadurch gekennzeichnet, dass** es das Einleiten von Eisen(III)-oxid in die Flamme des Zementofens umfasst.

2. Verfahren nach Anspruch 1, **dadurch gekennzeichnet, dass** das Eisen(III)-oxid direkt in die Flamme des Zementofens eingeleitet wird.

3. Verfahren nach einem der Ansprüche 1 oder 2, **dadurch gekennzeichnet, dass** das Eisen(III)-oxid in Mischung mit wenigstens einem Brennstoff, der verwendet wird, um die Flamme des Zementofens zu unterhalten, eingeleitet wird.

4. Verfahren nach Anspruch 3, **dadurch gekennzeichnet, dass** der Brennstoff ein fester Brennstoff ist und dass das Eisen(III)-oxid zuvor mit diesem Brennstoff gemischt und gemeinsam gemahlen wird.

5. Verfahren nach einem der Ansprüche 1 bis 4, **dadurch gekennzeichnet, dass** das Eisen(III)-oxid in einer Menge von 0,1 bis 17 g pro MJ Wärmebilanz des Zementofens eingebracht wird.

6. Verfahren nach einem der Ansprüche 1 bis 5, **dadurch gekennzeichnet, dass** 0,1 g bis 8 g Eisen(III)-oxid pro MJ Wärmebilanz des Ofens eingebracht werden, um eine Reduktion des NOₓ-Gehalts um wenigstens 20 % sowie eine Eisen(III)-oxid-Konzentration des modifizierten Klinkers von weniger als 3 % zu erreichen.

7. Verfahren nach einem der Ansprüche 1 bis 6, **dadurch gekennzeichnet, dass** 8 g bis 17 g Eisen(III)-oxid pro MJ Wärmebilanz eingebracht werden, um gleichzeitig eine Verringerung um wenigstens 20 % des Stickoxidgehalts der aus dem Zementofen stammenden Gase und eine Korrekturwirkung des Eisenoxidgehalts in dem Endklinker, der einer Eisen(III)-oxid-Anreicherung von etwa 3 bis 5 Gew.-% entspricht, zu erreichen.

8. Verfahren nach einem der Ansprüche 1 bis 7, **dadurch gekennzeichnet, dass** das Eisen(III)-oxid in Form eines Gemischs, das wenigstens 2 Gew.-% Eisen(III)-oxid enthält, wobei der Rest des Gemischs im Wesentlichen von Oxiden, ausgewählt aus Al₂O₃, SiO₂ und Cao, gebildet ist, eingebracht wird.

9. Verfahren nach Anspruch 8, **dadurch gekennzeichnet, dass** das Gemisch ein für die Herstellung eines Klinkers verwendbares Rohmehl ist, wobei das Rohmehl 2 bis 8 Gew.-% Eisen(III)-oxid Fe₂O₃ enthält.

10. Verfahren nach einem der Ansprüche 1 bis 9, **dadurch gekennzeichnet, dass** es einen vorherigen Vorkalzinierungsschritt umfasst.

11. Verfahren nach Anspruch 10, **dadurch gekennzeichnet, dass** es ferner das Einleiten von Eisen(III)-oxid in die Vorkalzinierungsflamme umfasst.

## Claims

1. A process for manufacturing cement, including a burning stage, under the action of what is referred to as a cement plant kiln flame, of a raw meal having first been pre-heated and optionally precalcined using a precalcination flame, wherein it comprises the injection into the cement plant kiln flame of a ferric oxide.

2. The process according to claim 1, wherein it comprises the injection of said ferric oxide directly into the cement plant kiln flame.

3. The process according to claim 1 or 2, wherein said ferric oxide is injected after being mixed with at least one fuel used to feed the kiln flame.

4. The process according to claim 3, wherein said fuel is a solid fuel, and said ferric oxide is prior mixed and ground with that fuel.

5. The process according to any one of claims 1 to 4, wherein the ferric oxide is introduced at a rate of 0.1 to 17 g per MJ of heat balance of the cement kiln.

6. The process according to any one of claims 1 to 5, wherein from 0.1 to 8 g of ferric oxide per MJ of heat balance of the kiln is introduced, so as to obtain a NOx content reduction of at least 20% and a concentration of ferric oxide in the modified clinker of less than 3%

7. The process according to any one of claims 1 to 6, wherein from 8 to 17 g of ferric oxide per MJ of kiln heat balance is introduced so as to obtain both a reduction of at least 20% of the nitrogen oxide content of the gases from the kiln and an effect of correction of the iron oxide content of the clinker produced, enriching it in ferric oxide by about 3 to 5% by weight.

8. The process according to any one of claims 1 to 7, wherein said ferric oxide is introduced in the form of a mixture containing at least 2% by weight of ferric oxide, the rest of said mixture being essentially made up of oxides selected from the group consisting of Al2O3, Si02 and CaO.

9. The process according to claim 8, wherein said mixture is raw meal for clinker manufacture, said raw meal containing between 2 and 8% by weight of ferric oxide Fe203.

10. The process according to one of claims 1 to 9, which comprises a prior precalcination step.

11. The process according to claim 10, which further comprises the injection of ferric oxide into the precalcination flame.
